# EUROPÄISCHE PATENTSCHRIFT

(11) **EP 0 409 103 B1**
(45) Veröffentlichungstag und Bekanntmachung des Hinweises auf die Patenterteilung: **17.05.1995**
(21) Anmeldenummer: 90113457.7
(22) Anmeldetag: 13.07.1990
(51) Int. Cl.: B29C 63/18, B29C 65/64, D07B 7/14

(54) **Verfahren zum Umkleiden eines Steigungskabels mit einer Kunststoffschicht**
Method of covering a transmission cable with a thermoplastic layer
Procédé d'enrobage d'un câble d'entraînement par une couche de matière plastique

(30) Priorität: 20.07.1989 DE 3924121
(43) Veröffentlichungstag der Anmeldung: 23.01.1991
(73) Patentinhaber: MEFLEX TELECONTROL GMBH & CO., D-35630 Ehringshausen (DE)
(72) Erfinder: Pfaff, Martin, D-6333 Ehringshausen-Dreisbach (DE)
(74) Vertreter: Müller, Eckhard, Dr.

(56) Entgegenhaltungen:
- EP-A- 0 243 882
- DE-A- 3 442 494

## Beschreibung

Die Erfindung betrifft ein Verfahren zum Umkleiden einer definierten Länge eines Steigungskabels mit einer Kunststoffschicht gemäß dem Oberbegriff des Anspruches 1.

Die Erfindung geht aus von einem Verfahren, wie es in der DE-OS 34 42 494 offenbart ist, insbesondere von dem zusätzlichen Verfahrensschritt, wie er auf Seite 6, Zeile 14 ff, beschrieben ist. Dieser Verfahrensschritt besteht darin, den Außendurchmesser der Steigungswendel an der zu überziehenden Länge durch Herunterhämmern auf einen gegenüber dem übrigen Steigungswendel geringeren Außendurchmesser zu reduzieren.

Dieses Herunterhämmern hat jedoch den Nachteil, daß das Steigungskabel an den gehämmerten Stellen in seiner Struktur verdichtet wird. Das Kabel hat daher an diesen Stellen nicht mehr die gewünschte Flexibilität sondern wird steifer.

Der Erfindung liegt die Aufgabe zugrunde, ein Verfahren anzugeben, bei dem das Steigungskabel über seine gesamte Länge eine trotz der Reduzierung des Wendel-Außendurchmessers über eine definierte Länge durchgehend die gleiche Flexibilität besitzt.

Diese Aufgabe ist durch ein Verfahren gelöst, das die in Anspruch 1 angegebenen Verfahrensschritte umfaßt. Aus diesem Anspruch ergibt sich, daß die Erfindung im wesentlichen darin besteht, den Außendurchmesser der Steigungswendel an den dafür vorgesehenen Stellen nicht durch Herunterhämmern zu reduzieren, sondern durch spitzenloses Abschleifen des Außenumfanges. Dadurch wird die als nachteilig erwähnte Verdichtung der Kabelstruktur völlig vermieden, so daß das Kabel über seine gesamte Länge eine gleichmäßige Flexibilität besitzt. Die Werkstückbearbeitung mittels spitzenlosen Abschleifens ist bspw. aus "Fachkunde für metallbearbeitende Berufe", 31. Auflage, 1964, Verlag Willing & Co., Wuppertal-Barmen, oder "Zerpanntechnik", 2. Auflage, 1970, Friedr. Vierweg + Sohn, Braunschweig, bekannt.

Das auf diese Weise über eine definierte Länge in seinem Außendurchmesser reduzierte Steigungskabel kann dann auf dieser Länge in an sich bekannter Weise mit einem Kunststoffrohr überzogen werden, das seinerseits auf der reduzierten Steigungswendel durch eine äußere Krafteinwirkung festgelegt wird. Z.B. kann das Kunststoffrohr festgehämmert werden. Da dieses Hämmern nur auf dem Außenumfang des Kunststoffrohres erfolgt, hat es keinerlei Einfluß auf die Kabelstruktur und führt insbesondere nicht zu der unerwünschten Verdichtung. Der Kunststoff puffert gewissermaßen die Schläge gegenüber dem eigentlichen Kabel ab.

Die äußere Krafteinwirkung kann aber auch z.B. durch Anpreßrollen aufgebracht werden, mit denen das Kunststoffrohr auf dem Steigungskabel aufgerollt wird.

Schließlich wäre es auch denkbar, die Kunststoffschicht entlang der in ihrem äußeren Durchmesser reduzierten Länge des Steigungskabels derart aufzuspritzen, daß dabei das Kunststoffrohr entsteht. Dieser Spritzvorgang kann in einem Extruder erfolgen, der immer dann eingeschaltet wird, wenn die durchmesserreduzierte Länge des Steigungskabels durch die Extruderdüse läuft.

Allen Verfahrensschritten, mit denen das Kunststoffrohr auf dem Steigungskabel aufgebracht wird, ist jedoch gemeinsam, daß bei der Aufbringung ein Teil der Kunststoffrohrinnenwandung zwischen die Gänge der Steigungswendel tritt, so daß das Kunststoffrohr auf dem Steigungskabel eindeutig und unverrückbar festgelegt wird.

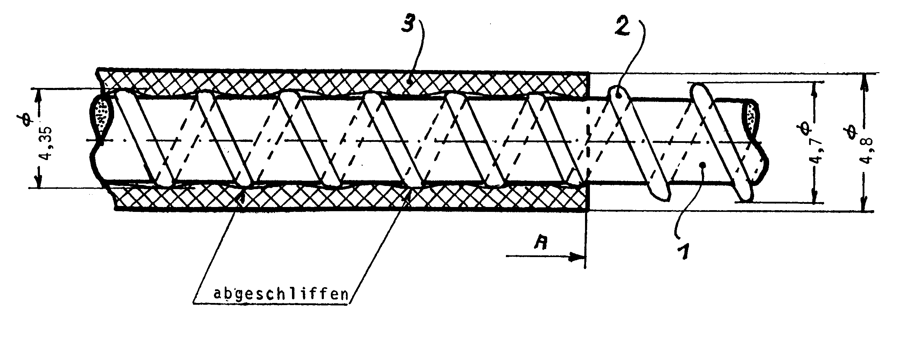

In der Zeichnung ist ein Ausführungsbeispiel im Querschnitt in Längsrichtung des Steigungskabels dargestellt, bei dem die einzelnen Durchmesser angegeben sind.

Das Steigungskabel 1 hat mit seiner Steigungswendel 2 einen Außendurchmesser von 4,7 mm, der zunächst auf der zu umkleidenden Kabellänge auf 4,35 mm heruntergeschliffen wird. Das Kunststoffrohr 3 hat ursprünglich einen Außendurchmesser von 5,5 mm und einen Innendurchmesser von 4,5 mm. Mit diesen Abmessungen wird das Rohr 3 über die heruntergeschliffene Kabellänge → A geschoben und danach durch eine äußere Kraft im Durchmesser verkleinert, d.h. zwischen die Gänge der Steigungswendel 2 gedrückt, z.B. durch Hämmern oder durch Rollen, Drücken oder dgl. Im Endzustand hat die Kunststoffumkleidung dann einen Außendurchmesser von 4,8 mm. Wie bereits ausgeführt ist bei diesem Vorgang ein Teil der Kunststoffrohrinnenwand in den Zwischenraum zwischen die Gänge der Steigungswendel 2 getreten und bewirkt so das Festsitzen der Kunststoffumkleidung auf dem Kabel. Die umkleidete Kabellänge ist somit im Außendurchmesser nur unwesentlich größer als die freie Kabellänge, nämlich gerade so viel größer, um das Spiel im Führungsrohr auszufüllen und trotzdem leicht darin zu gleiten.

Zusätzlich kann das ganze Steigungskabel 1 auch noch mit einer dünnen Schicht von Kunststoff elektrostatisch beschichtet sein. Diese an sich bekannte Beschichtung erfolgt vor dem Abschleifen des Durchmessers auf der Kabellänge → A.

Außerdem kann zwischen die Wendel 2 noch ein beflockter Faden eingewickelt werden, was ebenfalls für sich allein bereits bekannt ist.

## Patentansprüche

1. Verfahren zum Umkleiden einer definierten Länge eines eine Steigungswendel (2) aufweisenden Steigungskabels (1) mit einer Kunststoffschicht, dadurch gekennzeichnet, daß die Steigungswendel (2) des Steigungskabels (1) auf der mit Kunststoff zu umkleidenden Länge (→ A) durch spitzenloses Abschleifen des Außendurchmessers auf einen geringeren Durchmesser reduziert wird und daß auf diese Länge geringeren Durchmessers in an sich bekannter Weise ein Kunststoffrohr (3) derart festgelegt wird, daß unter Verringerung seines Außendurchmessers mindestens ein Teil der Kunststoffrohrinnenwandung zwischen die Gänge der Steigungswendel (2) tritt.

2. Verfahren nach Anspruch 1, dadurch gekennzeichnet, daß die Verringerung des Außendurchmessers des Kunststoffrohres (3) durch eine äußere Krafteinwirkung, z.B. in an sich bekannter Weise durch einen Hämmervorgang oder durch einen Rollvorgang erfolgt.

3. Verfahren nach Anspruch 1, dadurch gekennzeichnet, daß die Kunststoffschicht durch einen Spritzvorgang angebracht wird.

4. Verfahren nach einem der Ansprüche 1 bis 3, dadurch gekennzeichnet, daß das Steigungskabel (1) über seine gesamte Länge durch Wirbelsintern in an sich bekannter Weise mit einer aufgeschmolzenen Kunststoffschicht überzogen wird.

5. Verfahren nach einem der Ansprüche 1 bis 3, dadurch gekennzeichnet, daß das Steigungskabel (1) über seine gesamte Länge in an sich bekannter Weise durch elektrostatische Beschichtung mit einer aufgeschmolzenen Kunststoffschicht überzogen wird.

6. Verfahren nach einem der Ansprüche 4 oder 5, dadurch gekennzeichnet, daß auf der nicht mit einer Kunststoffschicht umkleideten Länge des Steigungskabels (1) zwischen die Windungen der Steigungswendel (2) ein Flockträgerfaden eingewickelt wird, dessen Beflockung mit der Kunststoffschicht verschmolzen wird.

## Claims

1. Method of sheathing a defined length of a pitch cable (1), which is provided with a pitch helix (2), with a synthetic material layer, characterised thereby that the pitch helix (2) of the pitch cable (1) is reduced to a smaller diameter over the length (→ A) to be sheathed by the synthetic material through centreless grinding of the outer diameter and that a synthetic material tube (3) is secured in per se known manner over this length of smaller diameter in such a manner that under reduction of its outer diameter at least a part of the synthetic material tube inner wall enters between the threads of the pitch cable (2).

2. Method according to claim 1, characterised thereby that the reduction of the outer diameter of the synthetic tube (3) takes place through an external force action, for example in per se known manner by a hammering process or by a rolling process.

3. Method according to claim 1, characterised thereby that the synthetic material layer is applied by an injection moulding process.

4. Method according to one of claims 1 to 3, characterised in that the pitch cable (1) is coated over its entire length with a melted-on synthetic material layer in per se known manner by whirl sintering.

5. Method according to one of claims 1 to 3, characterised in that the pitch cable (1) is coated over its entire length with a melted-on synthetic layer in per se known manner by electrostatic coating.

6. Method according to one of claims 4 or 5, characterised thereby that a flock carrier thread is wound between the turns of the pitch helix (2) on the length of the pitch cable (1) not sheathed by a synthetic material layer, the flock of the thread being melted with the synthetic material layer.

## Revendications

1. Procédé pour revêtir une longueur définie d'un câble d'entraînement (1) muni d'un filet hélicoïdal (2) avec une couche de matière synthétique, caractérisé en ce que le filet hélicoïdal (2) du câble d'entraînement (1) est réduit à un diamètre plus faible par rectification sans centre du diamètre extérieur sur la longueur (→A) à revêtir de matière synthétique, et en ce que, sur cette longueur de diamètre plus faible, un tube en matière synthétique (3) est fixé d'une manière connue en soi, de telle sorte qu'au moins une partie de la paroi intérieure du tube en matière plastique (3), par réduction de son diamètre extérieur, s'engage entre les passages libres du filet hélicoïdal (2).

2. Procédé selon la revendication 1, caractérisé en ce que la réduction du diamètre extérieur du tube en matière synthétique (3) est obtenue par l'action d'une force extérieure, par exemple, d'une manière connue en soi, par un procédé de martelage ou de roulage.

3. Procédé selon la revendication 1, caractérisé en ce que la couche de matière synthétique est apportée par un procédé d'injection.

4. Procédé selon l'une des revendications 1 à 3, caractérisé en ce que le câble d'entraînement (1) est recouvert sur toute sa longueur d'une couche de matière synthétique fondue obtenue, d'une manière connue en soi, par revêtement en lit fluidisé.

5. Procédé selon l'une des revendications 1 à 3, caractérisé en ce que le câble d'entraînement (1) est recouvert sur toute sa longueur d'une couche de matière synthétique fondue obtenue, d'une manière connue en soi, par revêtement électrostatique.

6. Procédé selon l'une des revendications 4 ou 5, caractérisé en ce que, sur la longueur du câble d'entraînement (1) non entourée d'une couche de matière synthétique, un fil, dont le flocage est fondu avec la couche de matière synthétique, est enroulé dans les passages libres du filet hélicoïdal (2).
